Europäisches Patentamt

European Patent Office

Office européen des brevets

(19)

(11) Publication number: 0 383 633
A1

# EUROPEAN PATENT APPLICATION

(21) Application number: 90301730.9

(51) Int. Cl.5: A01C 23/02

(22) Date of filing: 16.02.90

(30) Priority: 17.02.89 NZ 228026

(43) Date of publication of application:
22.08.90 Bulletin 90/34

(84) Designated Contracting States:
AT BE CH DE DK ES FR GB IT LI LU NL SE

(71) Applicant: AITCHISON INDUSTRIES LIMITED
Mosston Road
Wanganui(NZ)

(72) Inventor: Barbour, Richard Samuel
3, Chinauley Park, Banbridge
County Down, BT32 4JL(GB)

(74) Representative: Bassett, Richard Simon et al
ERIC POTTER & CLARKSON St. Mary's Court
St. Mary's Gate
Nottingham NG1 1LE(GB)

(54) Improvements in and relating to injection of animal manure slurry into soil.

(57) A device for distributing manure slurry under pressure from a holding tank to outlet means coupled to injector nozzles characterised by:
a body including a chamber (13) having at least one inlet port (14) and a plurality of outlet ports (15),
a plurality of first static cutter members (20) affixed within said chamber,
at least one said blade member (21) rotatably disposed with said chamber (13) and co-operable with said static cutter members (20),
a prime mover mounted on said body, and
means coupling an output of said prime mover (19) to rotate said second blade member.

Fig.1

EP 0 383 633 A1

# IMPROVEMENTS IN AND RELATING TO INJECTION OF ANIMAL MANURE SLURRY INTO SOIL

This invention relates to the injection of animal manure slurry into soil.

It is known to pump farmyard slurry which is rich in nutrients into a large tank for subsequent spreading over pasture. This unfortunately has the effect of fouling the pasture for some weeks and instead of benefiting growth has often been found to have the opposite effect, in that solids from the slurry stick to pasture leaves preventing photosynthesis and thus checking growth. Further, the most important chemical to the plant N (nitrogen) is evaporated by sunlight and is converted to ammonium gases which float away into the atmosphere and therefore provide little use for the plant.

In order to overcome these problems, it is known to inject the slurry into the pasture at the plant root zone (to a depth of 50mm 75mm) by utilising a machine which pierces the soil surface, and by means of a winged blade creates a cavity under the surface of the soil large enough to accept a quite significant quantity of slurry. This has the advantage in that the pasture is not fouled and ammonia is not lost. Immediate and quite beneficial impact on grass growth has been noted within just a few days of injection by this method. However, there are problems associated with this procedure. If slurry is pumped straight from the tank to subsoil injectors, clods of manure, straw and other solid objects become lodged in the relatively narrow outlet hoses that extend to each injector. When these become blocked, it is particularly difficult to clear them and as such renders unacceptable operational delays to the overall commercial viability of the machine and procedure. Further, the sheer density of the slurry material can cause blockages to the outlet hoses and lead to a sealing-off of the hoses, often leaving only one or two injectors doing the job that was supposed to be done by them all.

The aim of the present invention is to provide an improved feeding device for feeding the slurry to injection hoses thus at least mitigating the aforementioned problems.

According to a broad aspect of the invention, there is provided a device for distributing manure slurry under pressure from a holding tank to outlets coupled to injector nozzles comprising:
a body including a chamber having at least one inlet port and a plurality of outlet ports,
a plurality of first blade members affixed within said chamber,
at least one said blade member rotatably disposed with said chamber and co-operable with said fixed blade members,
a prime mover mounted on said body, and
means coupling an output of said prime mover to rotate said second blade member.

In further describing the invention, reference will be made to the accompanying drawings, which illustrate, by way of example, an embodiment of the invention, and, in which:
Figure 1 is a schematic cross-sectional view taken through the body of a device of the invention;
Figure 2 is a view showing one layout and configuration of outlets;
Figure 3 is a partial elevation illustrating the relative positions of blade members; and
Figure 4 is a plan view of a rotatable blade member and carrier.

In a preferred embodiment, a device according to the invention is used in conjunction with a machine suited to being towed by a tractor over pasture to be treated. The machine would typically comprise a chassis including a drawbar for coupling to the tractor. The chassis would be mounted on spaced apart wheels which follow the surface of the pasture.

A number of discs, typically seven, depend from the chassis and slit the surface of the pasture to a depth of approximately 50mm-75mm as the machine is towed by the tractor. A wing-shaped blade is mounted behind each disc and forms a slit or cut under the surface of the soil transverse to the base of the slit cut by the disc. The manure slurry is injected into this zone under pressure via an injection nozzle mounted immediately behind the wing-shaped blade.

In prior art constructions, the manure slurry is pumped directly from a holding tank under pressure to each of the injection nozzles. The major problem with this arrangement is that the tubes supplying the manure to the inejctors become easily blocked due to lumps of material that are present in the slurry. The device according to the present invention overcomes this problem and will now be described with reference to this type of machine.

Referring to the drawings, the device of the invention comprises a casing 10, expediently cylindrical in shape, closed by a top plate or cover, 11 and a bottom plate 12 to define a chamber 13 therein. The top plate 11 incorporates a slurry inlet 14, which is preferably at least 125mm in diameter. The slurry inlet 14 is coupled to the outlet of a slurry holding tank (not shown) to admit slurry under pressure into the chamber 13. Conveniently, a slurry inlet control valve is incorporated, in line, between the slurry holding tank and the inlet 14, in order to allow accurate control of slurry flow to the chamber 13.

The bottom plate 12 has a planar inner surface which includes a number of outlet ports 15, in this example five, spaced evenly around a desired radius. Each port 15 is coupled to a distribution hose 16 which conveys slurry to an injector (not shown).

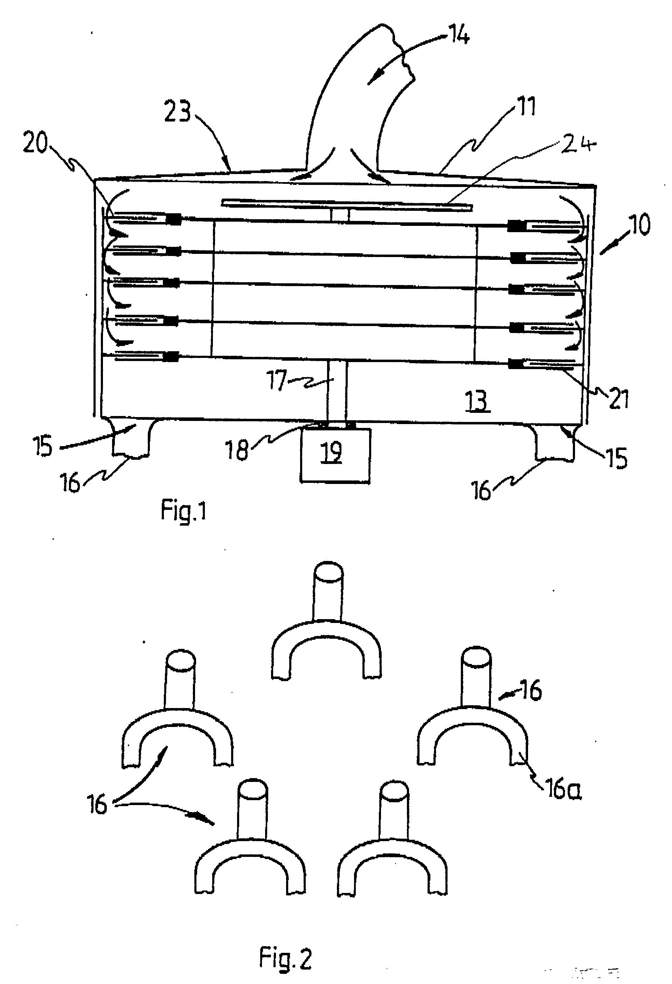

As shown in Figure 2, the hoses 16 divide, at bifurcations 16a to provide feed to two separate injectors. To this end, the cross-sectional area of hose portion 16 is approximately twice that of portion 16a.

A drive shaft 17 is mounted in bearings, indicated generally at 18, to extend through the bottom plate 12, towards the top plate 11, one end of the drive shaft 17 is coupled to a prime mover assembly 19 mounted on the outside of the casing 10. The prime mover expediently comprises a hydraulic motor with an output speed in the vicinity of 900-1500rpm, driven from the hydraulics of the towing tractor. The motor may, conveniently, be mounted on a frame (not shown) which also supports the injectors.

In the described embodiment, a plurality of static blade members 20 are mounted in stack fashion to the inner wall of the casing. The number of static blades may be varied to suit operating conditions. As illustrated, five stacks of blades may be spaced circumferentially about the casing, with each stack consisting of four evenly spaced apart individual blades. The blades may be rectangular, triangular, trapezoidal or any other suitable shape.

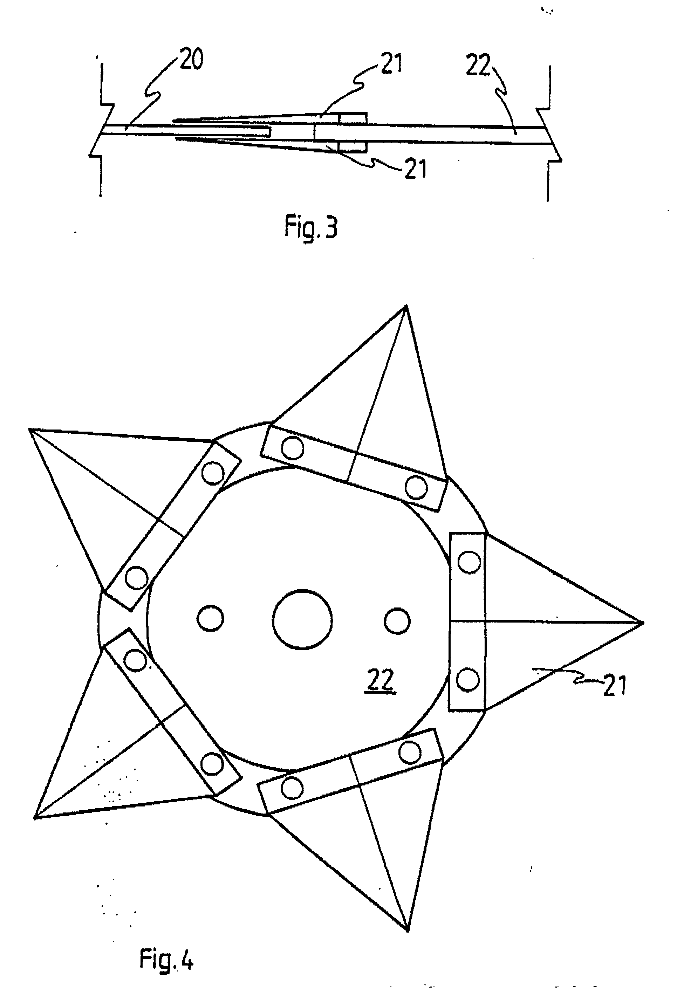

A plurality of rotating cutters 21 are mounted in stack fashion for rotating movement on shaft 17. There are preferably four to six blades mounted on a carrier 22 with each blade comprising two aligned but closely spaced apart knives which, in use, pass one over and one under a corresponding static blade 20 (see Figure 3).

In an alternative arrangement, each of said five stacks of static blades may contain eight equally spaced individual blades 20. Conveniently spacer members are included between each blade in each stack. In this arrangement four blade carriers 22 each support six rotating cutters 21, the cutters extending between corresponding pairs of static blades 20, of each stack.

In either case, a clamping disk 24 mounted at the inner end of the drive shaft 17 acts to retain the blade carriers 22 in position for rotation with the shaft 17.

Slurry enters the chamber 13 via a manifold 23 and into the chamber via ports (not shown) adjacent the static cutters.

In use, manure slurry admitted under pressure to the chamber 13 is forced between the series of cooperating static cutters and relating blades and is shredded. Clods of material which would otherwise block the outlet tubes and injectors are shredded by the cutters 20 and blades 21 as the carriers 22 rotate.

Shredded material exits the chamber 13 via the outlets 15 and passes, under pressure, to inejctors for injection into the soil.

The device is mounted at a convenient centrally located position on the chassis of the machine and is coupled to receive the manure slurry from the holding tank under pressure. It will be appreciated that the device may be modified by altering the numbers of inlet ports, outlet ports and prime mover specification, without departing from the scope of the invention.

## Claims

1. A device for distributing manure slurry under pressure from a holding tank to outlet means coupled to injector nozzles characterised by:
a body including a chamber having at least one inlet port and a plurality of outlet ports,
a plurality of first static cutter members affixed within said chamber,
at least one said blade member rotatably disposed with said chamber and co-operable with said static cutter members,
a prime mover mounted on said body, and
means coupling an output of said prime mover to rotate said second blade member.

2. A device according to claim 1, wherein a plurality of spaced apart static cutters are provided in separate stacks, the stacks being spaced circumferentially about the chamber.

3. A device according to claim 1 or claim 2, wherein the blade members are supported on a rotatable carrier that is journaled to a driven shaft of the prime mover.

4. A device according to claim 3, wherein a plurality of blade members are mounted on each rotatable carrier.

5. A device according to any one of claims 1 to 4, wherein said blade members are rectangular, triangular, trapezoidal or any other suitable shape.

6. A device according to any one of claims 1 to 5, wherein each blade terminates in two aligned but closely spaced apart knife blades, each knife blade being positioned, respectively, above and below the level of a corresponding static blade for cooperation therewith upon rotation.

7. A device according to any one of claims 1 to 5, wherein each said blade extends between a pair of said static blades in a stack, for co-operation therewith upon rotation.

8. A device according to any one of claims 1 to 7, wherein the prime move is an hydraulic motor.

9. A device according to any one of claims 1 to 8, wherein a valve is provided to control the inlet of slurry to the chamber.

10. A device according to any one of claims 1 to 9, wherein each outlet means divides to feed two separate outlet feed lines, each supplying slurry to a separate injector nozzle.

Fig.1

Fig.2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-79018 (VOGELSANG)<br>* page 3, line 16 - page 9, line 34; figures 1-4 * | 1, 3, 5, 8 | A01C23/02 |
| X | CH-A-366415 (MÖRTL)<br>* page 2, lines 8 - 73; figures 1-3 * | 1, 2, 3, 4, 5, 6, 7a | |
| X | FR-A-2325312 (VAN DER LELY)<br>* page 2, line 26 - page 16, line 31; figures 1-8 * | 1, 2, 3, 4, 5, 9 | |
| X | FR-A-2261697 (JEULIN)<br>* page 2, lines 6 - 25; figures 1-3 * | 1, 3, 4, 5 | |
| A | DE-B-1020477 (JENSEN)<br>* column 3 - column 4, line 11; figures 1, 2 * | 1, 9 | |
| | | | **TECHNICAL FIELDS SEARCHED (Int. Cl.5 )**<br><br>A01C |

The present search report has been drawn up for all claims

| Place of search | Date of completion of the search | Examiner |
|---|---|---|
| THE HAGUE | 22 MAY 1990 | VERMANDER R.H. |